# EUROPÄISCHE PATENTSCHRIFT

(11) **EP 3 789 278 B1**
(45) Veröffentlichungstag und Bekanntmachung des Hinweises auf die Patenterteilung: **27.09.2023**
(21) Anmeldenummer: 20176788.6
(22) Anmeldetag: 27.05.2020
(51) Int. Cl.: B62D 55/12, B62D 55/32, B62D 55/135, B62D 55/14

(54) **RAUPENLAUFWERK**
CATERPILLAR TRACK
TRAIN DE ROULEMENT À CHENILLES

(30) Priorität: 05.09.2019 DE 102019123766
(43) Veröffentlichungstag der Anmeldung: 10.03.2021
(73) Patentinhaber: CLAAS Industrietechnik GmbH, 33106 Paderborn (DE)
(72) Erfinder: Obermeier-Hartmann, Robert, 33014 Bad Driburg (DE); Fedde, Dr., Thomas, 33129 Delbrück (DE)
(74) Vertreter: CLAAS Gruppe

(56) Entgegenhaltungen:
- FR-A- 829 168
- SU-A1- 1 050 953
- US-A1- 2010 072 813
- US-A1- 2010 133 898

## Beschreibung

Die vorliegende Anmeldung betrifft ein Raupenlaufwerk gemäß dem Oberbegriff von Anspruch 1.

Ein solches Raupenlaufwerk, das insbesondere eine landwirtschaftliche Arbeitsmaschine wie beispielsweise einen Traktor, ein Mähdrescher oder ein Feldhäcksler sein kann, umfasst zwei in Längsrichtung des Raupenlaufwerks hintereinander sowie einander gegenüberliegend angeordnete Haupträder. Diese Haupträder sind mit mindestens einem Laufgurt umspannt. Typischerweise ist mindestens eines der Haupträder aktiv antreibbar, sodass eine Antriebskraft auf den Laufgurt übertragbar ist und letzterer mithin während eines Betriebs des Raupenlaufwerks fortwährend um die beiden Haupträder umläuft. Entsprechend ist der Laufgurt typischerweise in sich geschlossen ausgebildet.

Die Haupträder umfassen jeweils mindestens einen Führungsabschnitt, der sich in Umfangsrichtung des jeweiligen Hauptrades erstreckt. Der Führungsabschnitt ist radial außenliegend an dem jeweiligen Hauptrad angeordnet, sodass er zumindest teilweise einen äußeren Umfang des Hauptrades bildet. Der Führungsabschnitt ist dazu geeignet, zumindest mittelbar, insbesondere unter Zwischenschaltung eines Kontaktelements, den Laufgurt zu führen. Die Haupträder weisen jeweils mindestens eine Übertragungseinheit auf, die gurtseitig an mindestens einem Führungsabschnitt des jeweiligen Hauptrades angeordnet ist. Die Übertragungseinheit umfasst ein radseitiges Tragelement sowie ein gurtseitig mit dem Tragelement verbundenes Kontaktelement. Das Kontaktelement ist typischerweise unmittelbar in Kraft übertragender Weise mit dem Tragelement verbunden. Es dient dazu, in unmittelbaren Kontakt mit dem Laufgurt zu treten und diesen zu führen. Mithin bildet das Kontaktelement eine Kontaktzone mit der Innenseite des Laufgurts aus. Radseitig ist die Übertragungseinheit in Kraft übertragender Weise an dem ihm zugeordneten Führungsabschnitt angeordnet.

Raupenlaufwerke der vorstehend beschriebenen Art sind im Stand der Technik bereits bekannt. Hierzu wird beispielhaft auf die Dokumente US 10,272,959 B2, US 2010/133898 A2 und US 2010/072813 A1 hingewiesen. Dieses beschreibt unter anderem ein Raupenlaufwerk, das mit einem Kühlsystem ausgestattet ist. Das Kühlsystem dient dazu, zumindest einzelne Komponenten des Raupenlaufwerks während eines Betriebs desselben zu kühlen. Hierzu wird ein Gebläse vorgeschlagen, mittels dessen Hilfsräder des Raupenlaufwerks, die sogenannten "*idler wheels*", mit einem Kühlluftstrom beaufschlagt und auf diese Weise aktiv gekühlt werden. Hierdurch soll die Lebensdauer des Raupenlaufwerks erhöht werden.

Trotz derartigen Maßnahmen hat sich die Temperaturentwicklung insbesondere während einer Straßenfahrt von Raupenlaufwerken als problematisch herausgestellt. Dies betrifft vor allem eine erhöhte Temperatur des Laufgurts. Infolge hoher Temperaturen tritt ein überproportionaler Verschleiß auf.

Der vorliegenden Anmeldung liegt mithin die Aufgabe zugrunde, ein Raupenlaufwerk bereitzustellen, dessen Verschleiß gegenüber bekannten Raupenlaufwerken verringert ist.

Die zugrunde liegende Aufgabe wird erfindungsgemäß mittels eines Raupenlaufwerks mit den Merkmalen des Anspruchs 1 gelöst. Vorteilhafte Ausgestaltungen ergeben sich aus den Unteransprüchen 2 bis 11.

Das erfindungsgemäße Raupenlaufwerk ist dadurch gekennzeichnet, dass eine dem Kontaktelement zugewandte Gurtseite des Tragelements mit einem Relief ausgebildet ist. Ein solches Relief kann insbesondere darin bestehen, dass das Tragelement eine Mehrzahl von Hochbereichen aufweist, die sich ausgehend von einer Grundebene des Tragelements in das Kontaktelement hinein erstrecken. Alternativ oder zusätzlich ist die Ausbildung korrespondierender Tiefbereiche denkbar. In jedem Fall wirkt das Relief derart, dass eine Verbindungsfläche zwischen dem Kontaktelement und dem Tragelement gegenüber einer Grundfläche des Kontaktelements vergrößert ist. Die Verbindungsfläche beschreibt dabei diejenige Fläche, über die das Kontaktelement und das Tragelement physisch aneinander anliegen. Die Grundfläche orientiert sich demgegenüber an den äußeren Abmessungen des Kontaktelements und weist dementsprechend typischerweise eine in sich ebene, rechteckige oder trapezförmige Form auf.

Das erfindungsgemäße Raupenlaufwerk hat viele Vorteile. Insbesondere bewirkt das Relief infolge der damit einhergehenden Vergrößerung der Verbindungsfläche gegenüber einer in sich ebenen Ausgestaltung des Tragelements einen verbesserten Wärmeübergang von dem Kontaktelement auf das Tragelement. Das Kontaktelement kann insbesondere von einer Gummibeschichtung gebildet sein, die beispielsweise von einem Elastomer gebildet ist. Da das Kontaktelement in aller Regel in unmittelbarem Kontakt mit dem Laufgurt steht und letzterer insbesondere bei einer Straßenfahrt eine erhöhte Temperatur aufweist, ist es von Interesse, die dadurch in das Kontaktelement eingetragene Wärmeenergie möglichst zügig in eine von dem Laufgurt wegführende Richtung abzuführen. Die infolge des Reliefs vergrößerte Verbindungsfläche ermöglicht eine solche bessere Abfuhr von dem Kontaktelement in das Tragelement, da der Übergang über eine gegenüber dem Stand der Technik vergrößerte Fläche stattfinden kann. Ausgehend von dem Tragelement kann die Wärmeenergie sodann weiter abgeführt werden. Dies kann sowohl unmittelbar mittels eines Wärmeübergangs an die Umgebungsluft als auch mittels eines Wärmeübergangs an den zugeordneten Führungsabschnitt des jeweiligen Hauptrads stattfinden. Letzteres ist vor allem dann möglich, wenn das Tragelement unmittelbar an einem jeweiligen Führungsabschnitt montiert ist. Der verbesserte Wärmeübergang von dem Kontaktelement auf das Tragelement hat schließlich den Effekt, dass ein von dem Laufgurt abgeführter Wärmestrom gegenüber dem Stand der Technik vergrößert ist, wodurch effektiv eine verbesserte Kühlung des Laufgurts erreicht wird. Hierdurch wird der Verschleiß des Laufgurts gegenüber dem Stand der Technik vermindert.

In einer besonders vorteilhaften Ausgestaltung des erfindungsgemäßen Raupenlaufwerks ist das Tragelement mit mindestens einem Luftführungskanal ausgestattet. Ein solcher Luftführungskanal verbessert einen Wärmeübergang von dem Tragelement an die Umgebungsluft, indem eine Übergangsfläche, an der besagter Wärmeübergang stattfindet, gegenüber einem Tragelement vergrößert ist, das keinen Luftführungskanal aufweist. Mithin wird infolge der Anordnung mindestens eines solchen Luftführungskanals mittelbar ein von dem Laufgurt abgehender Wärmestrom vergrößert, wodurch effektiv eine Temperatur des Laufgurts gegenüber dem Stand der Technik verringert ist.

Der mindestens eine Luftführungskanal kann in einer vorteilhaften Ausgestaltung das Tragelement durchdringen, sodass der Luftführungskanal gewissermaßen einen radial geschlossenen Tunnel bildet. Die Durchdringung des Tragelements kann insbesondere in Umfangsrichtung des jeweilig dem Tragelement zugeordneten Hauptrades orientiert sein. Alternativ oder zusätzlich ist eine Orientierung eines Luftführungskanals senkrecht zu der Umfangsrichtung sowie tangential zu dem Hauptrad denkbar.

Alternativ oder zusätzlich zu mindestens einem das Tragelement durchdringenden Luftführungskanal ist es ferner denkbar, dass das Tragelement mindestens einen Luftführungskanal aufweist, der an einem Rand des Tragelements, insbesondere an einer Radseite desselben, angeordnet ist. Ein solcher Luftführungskanal ist mithin nicht radial umschlossen, sondern an mindestens einer Seite zu der Umgebungsluft hin offen. Insbesondere kann der Luftführungskanal radseitig offen ausgebildet sein.

In einer besonders vorteilhaften Ausgestaltung ist das Tragelement geprägt ausgeführten, wobei sich im Zuge der Prägung an der Gurtseite des Tragelements Hochbereiche zwecks Vergrößerung der Verbindungsfläche zwischen dem Tragelement und dem Kontaktelement sowie an der Radseite des Tragelements Luftführungskanal zwecks Vergrößerung einer Konvektionsfläche zwischen dem Tragelement und der Umgebungsluft ausbilden. Bei einem solchen Tragelement ist das Relief entsprechend korrespondierend zu Luftführungskanälen ausgebildet, wobei das Relief bildende Hochbereiche mit die Luftführungskanäle bildenden Tiefbereichen korrespondieren.

Um den Wärmeaustausch zwischen dem Laufgurt und dem Kontaktelement zu verbessern, wird weiterhin vorgeschlagen, dass das Kontaktelement einen Metallanteil aufweist. Dieser kann insbesondere mindestens 5 Massenprozent, vorzugsweise mindestens 10 Massenprozent, betragen. Sofern das Kontaktelement von einem Elastomer gebildet ist, kann der Metallanteil insbesondere in Form eines Metallpulvers in eine Elastomermatrix eingebunden werden. Aufgrund der besonders guten Wärmeleiteigenschaften des Metalls kann mittels eines solchen Kontaktelements ein Wärmetransport von dem Laufgurt hin zu dem Tragelement verbessert werden.

Das erfindungsgemäße Raupenlaufwerk weiter ausgestaltend weist mindestens eines der Haupträder, vorzugsweise beide Haupträder, eine Vielzahl einzelner Felgensegmente auf. Diese erstrecken sich jeweils radial bezogen auf eine jeweilige Drehachse zugehörigen Hauptrades. Die Felgensegmente weisen jeweils einen Führungsabschnitt auf, der sich in Umfangsrichtung des jeweiligen Hauptrades erstreckt.

Sofern ein jeweiliges Hauptrad in der vorstehend beschriebenen Weise mit einer Vielzahl einzelner Felgensegmente ausgestattet ist, ist es weiterhin zu bevorzugen, wenn zumindest eine Mehrzahl dieser Felgensegmente, vorzugsweise sämtliche Felgensegmente, jeweils eine Übertragungseinheit aufweisen. Idealer Weise ist ein jeweiliges Hauptrad derart konzipiert, dass sämtliche Führungsabschnitte mittels einer vorstehend beschriebenen Übertragungseinheit ausgebildet sind, die das Kontaktelement und das mit dem Relief versehene Tragelement umfasst. Auf diese Weise kann der Laufgurt des Raupenlaufwerks unter Ausnutzung einer Abführung von Wärmeenergie über das Kontaktelement und das Tragelement bestmöglich gekühlt werden.

Vorteilhafterweise ist die Übertragungseinheit zerstörungsfrei lösbar an dem jeweiligen Führungsabschnitt des zugehörigen Hauptrades befestigt. Insbesondere kann die Übertragungseinheit mittels Schraubbolzen an einem jeweiligen Felgensegment eines Hauptrades verschraubt sein.

Um den Laufgurt zusätzlich zu der Energieabfuhr über eine oder mehrere Übertragungseinheiten zu kühlen, verfügt das erfindungsgemäße Raupenlaufwerk in einer besonders vorteilhaften Ausgestaltung über mindestens ein Kühlsystem, mit dem mindestens eine Komponente des Raupenlaufwerks kühlbar ist. Vorzugsweise ist das Kühlsystem dem Laufgurt zugeordnet und umfasst mindestens eine Düse, mittels der ein flüssiges Kühlfluids auf eine den Haupträdern zugewandte Innenseite des Laufgurts aufbringbar ist. Das Kühlfluid kann insbesondere von Wasser gebildet sein, das mittels mindestens einer Düse auf die Innenseite des Laufbands aufgesprüht wird. Das Kühlsystem kann über eine Mehrzahl derartiger Düsen verfügen, die an verschiedenen Stellen des Raupenlaufwerks angeordnet sind, sodass das Raupenlaufwerk an verschiedenen Stellen mit dem Kühlfluid beaufschlagt werden kann.

Mittels des Aufbringens des Kühlfluids wird eine zusätzliche Abfuhr von Wärmeenergie ermöglicht, wobei das Kühlfluid infolge der erhöhten Temperatur des Laufgurts verdampft, wobei Verdampfungsenergie aufgenommen wird. Letztere wird mithin von dem Laufgurt abgeführt, sodass dieser effektiv gekühlt wird.

Die Verdampfung des Kühlfluids erfolgt umso besser, desto feiner das Kühlfluid auf den Laufgurt aufgebracht wird. Entsprechend ist es von Vorteil, wenn das Kühlfluid mittels der Düse zerstäubbar ist, sodass das Kühlfluid in Form eines Kühlnebels auf dem Laufgurt aufbringbar ist.

Die Erfindung ist nachstehend anhand eines Ausführungsbeispiels, das in den Figuren dargestellt ist, näher erläutert. Es zeigt:
- Fig. 1:: Eine schematische Ansicht einer landwirtschaftlichen Arbeitsmaschine mit zwei erfindungsgemäßen Raupenlaufwerken,
- Fig. 2:: Eine perspektivische Ansicht eines der Raupenlaufwerk der Arbeitsmaschine gemäß Figur 1,
- Fig. 3:: Eine perspektivische Ansicht eines Hauptrades des Raupenlaufwerks gemäß Figur 2,
- Fig. 4:: Eine perspektivische Ansicht einer Übertragungseinheit des Raupenlaufwerks gemäß Figur 2,
- Fig. 5:: Ein schematischer Querschnitt durch die Übertragungseinheit gemäß Figur 4,
- Fig. 6:: Ein schematischer Querschnitt durch eine alternative Übertragungseinheit,
- Fig. 7:: Ein schematischer Querschnitt durch eine weitere alternative Übertragungseinheit,
- Fig. 8:: Eine Explosionsdarstellung der Übertragungseinheit gemäß Figur 5 und
- Fig. 9:: Ein schematischer Querschnitt des Raupenlaufwerks gemäß Figur 2.

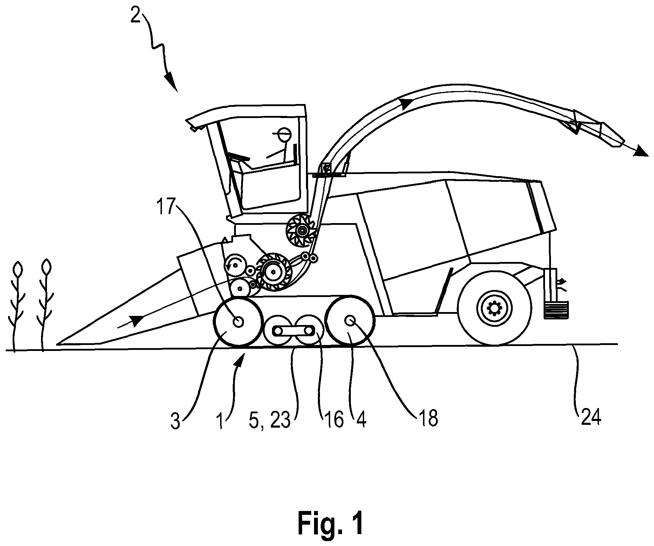

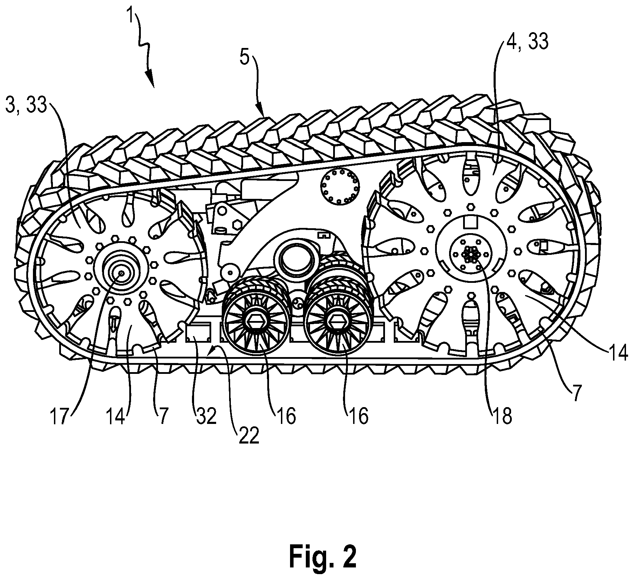

Ein Ausführungsbeispiel, das in den **Figuren 1 bis 9** dargestellt ist, zeigt ein erfindungsgemäßes Raupenlaufwerk **1**, wie es beispielsweise bei einer landwirtschaftlichen Arbeitsmaschine **2** zur Anwendung kommen kann, die in **Figur 1** dargestellt ist. Bei der landwirtschaftlichen Arbeitsmaschine **2** handelt es sich hier um einen Feldhäcksler, mittels dessen auf einem Untergrund **24** aufstehendes Erntegut erntbar ist. Die Arbeitsmaschine **2** ist mit zwei Raupenlaufwerken **1** ausgestattet, die jeweils an einander gegenüberliegenden Seiten der Arbeitsmaschine **2** angeordnet sind. Die Raupenlaufwerke **1** ergeben sich besonders gut anhand von **Figur 2**. Im Weiteren wird lediglich eines der Raupenlaufwerke **1** im Detail beschrieben.

Das Raupenlaufwerk **1** umfasst zwei einander gegenüberliegende Haupträder **3**, **4**, die in Längsrichtung des Raupenlaufwerks **1** betrachtet hintereinander angeordnet sind und jeweils um eine zentrale Drehachse **17**, **18** drehbar sind. Die Haupträder **3, 4** sind mittels eines in sich geschlossenen Laufgurts **5** umspannt. In dem gezeigten Beispiel ist das hintere Hauptrad **4** aktiv angetrieben, sodass die Arbeitsmaschine **2** mittels der Raupenlaufwerke **1** auf dem Untergrund **24** fahrbar ist. Zudem umfasst das Raupenlaufwerk **1** zwei Hilfsräder **16**, die - in Längsrichtung des Raupenlaufwerks **1** betrachtet - zwischen den Haupträdern **3**, **4** angeordnet sind. Die Hilfsräder **16** sind einem Bodenabschnitt **23** des Laufgurts **5** zugeordnet, wobei der Bodenabschnitt **23** jeweils denjenigen Abschnitt des Laufgurts **5** bezeichnet, der sich bei einem bestimmungsgemäßen Betrieb der Arbeitsmaschine **2** in einem unmittelbaren Kontakt mit dem Untergrund **24** befindet. Die Hilfsräder **16** dienen dazu, über die Raupenlaufwerke **1** abzutragende Lasten in den Untergrund **24** einzuleiten, wobei im Zusammenwirken der Hilfsräder **16** mit den Haupträdern **3**, **4** eine gegenüber einem normalen Rundrad geschaffene Aufstandsfläche erheblich vergrößert und mithin eine Flächenpressung des Untergrunds **24** verringert ist.

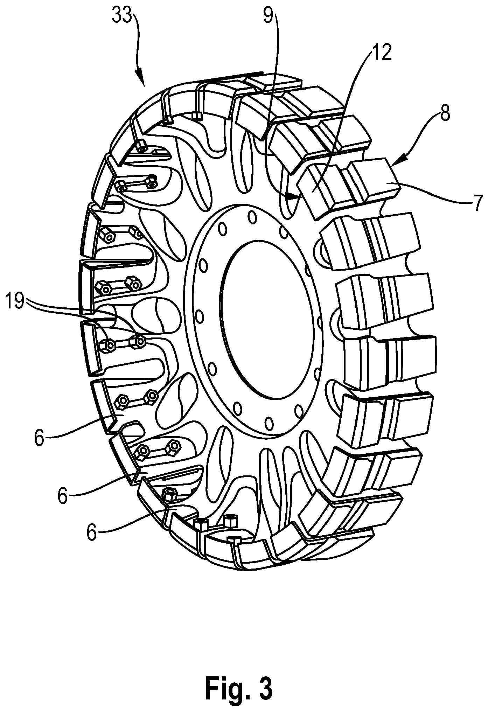

Die Haupträder **3**, **4** sind in dem gezeigten Beispiel jeweils von zwei Felgen **33** gebildet, die wiederum jeweils von einer Mehrzahl von Felgensegmente **14** gebildet sind. Dies ergibt sich besonders gut anhand von **Figur 3**. Die Felgen **33** eines jeweiligen Hauptrades **3**, **4** sind in Breitenrichtung des Laufwerks **1** betrachtet nebeneinander angeordnet. Die Felgensegmente **14** einer jeweiligen Felge **33** erstrecken sich bezogen auf die jeweils zugehörige Drehachse **17**, **18** in radiale Richtung nach außen. Die Felgensegmente **14** umfassen in dem gezeigten Beispiel jeweils zwei radial außenliegende Führungsabschnitte **6**, mittels derer der Laufgurt **5** entlang des Umfangs des jeweiligen Hauptrades **3**, **4** führbar ist. Die Führungsabschnitte **6** der Haupträder **3**, **4** sind jeweils mit einer Übertragungseinheit **8** ausgestattet, die in Kraft übertragender Weise an dem jeweiligen Felgensegment **14** angeordnet ist. Dies erfolgt in dem gezeigten Beispiel mittels einer Verschraubung der jeweiligen Übertragungseinheit **8** an dem zugehörigen Felgensegment **14**, wobei - wie sich insbesondere anhand von **Figur 3** ergibt - die Übertragungseinheiten **8** jeweils zwei bolzenförmige Befestigungsmittel **19** umfassen, die durch zugeordnete Ausnehmungen der Felgensegmente **14** führbar und an einer radseitigen Innenseite des jeweiligen Felgensegments **14** verschraubbar sind.

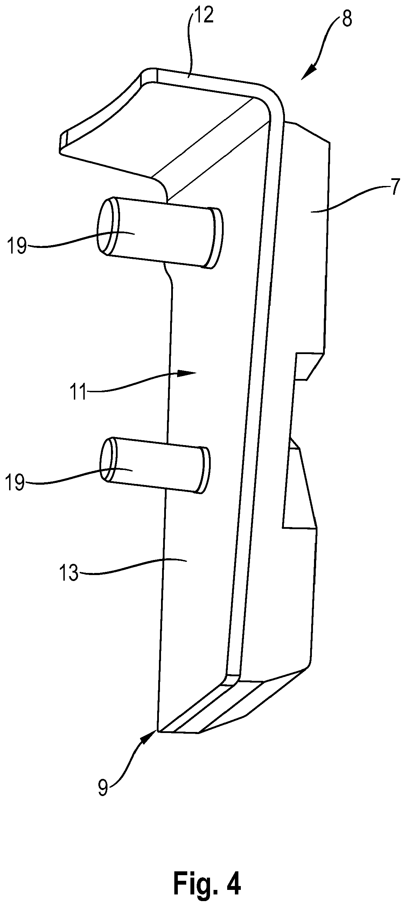

Die Übertragungseinheiten **8**, die sich besonders gut anhand von **Figur 4** ergeben, umfassen jeweils ein Kontaktelement **7** sowie ein Tragelement 9. Das Tragelement **9** ist in dem gezeigten Beispiel jeweils von einer Metallplatte gebildet, wobei das Tragelement **9** einen radial außen liegenden Tragabschnitt **13** sowie einen gegenüber dem Tragabschnitt **13** abgewinkelten Führschenkel **12** umfasst. Die Funktion des Führschenkels **12** ergibt sich besonders gut anhand von **Figur 2**, die an dem Laufgurt **5** mittig an dessen radseitiger Innenseite **22** Führungsklötze **32** zeigt. Diese Führungsklötze **32** dienen dazu, den Laufgurt **5** vor einem seitlichen Abrutschen von den Haupträdern **3**, **4** zu schützen. Hierzu sind die Führungsklötze **32** zwischen den Felgen **33** des jeweiligen Hauptrades **3**, **4** geführt, wobei die einander zugewandten Führschenkel **12** der Übertragungseinheiten **8** jeweils seitliche Anschlagflächen für die Führungsklötze **32** bereitstellen.

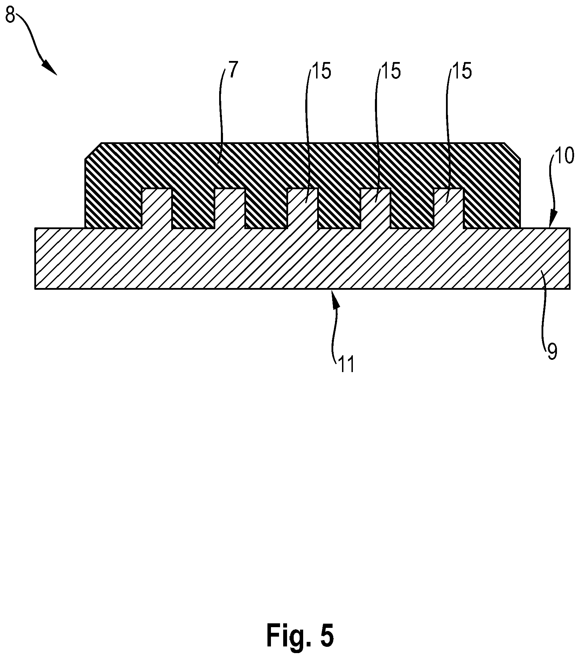

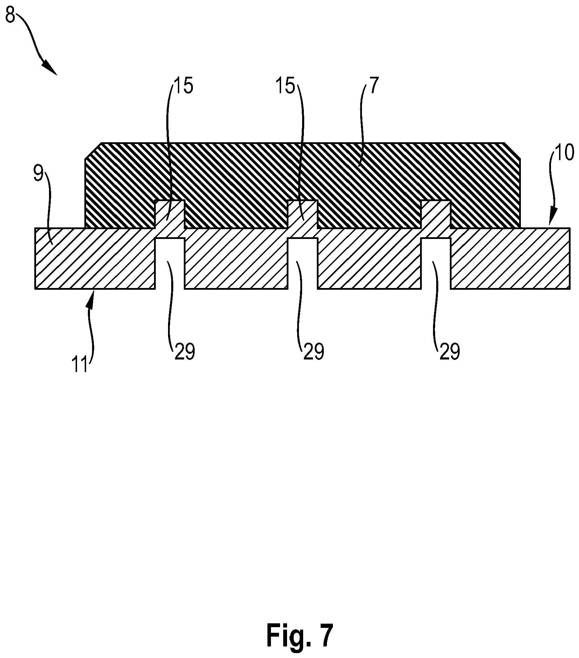

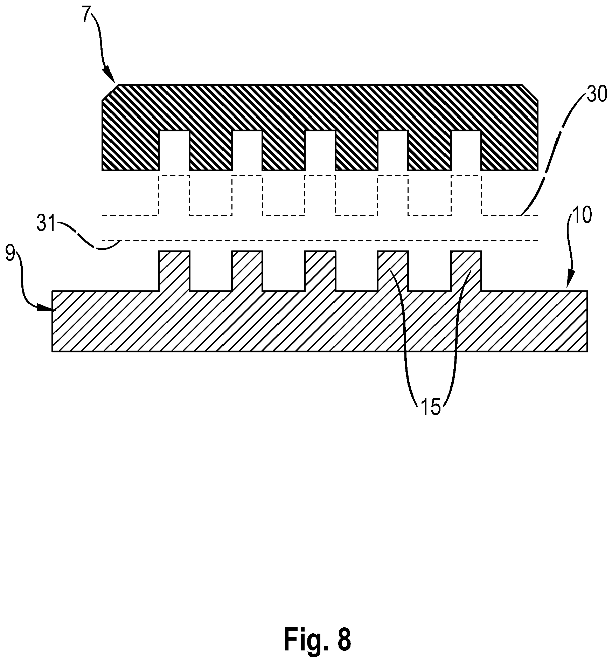

Die Tragabschnitte **13** der Übertragungseinheiten **8** dienen zur Aufnahme des jeweiligen Kontaktelements **7**, das in dem gezeigten Beispiel von einer elastomeren Beschichtung gebildet ist. Das Kontaktelement **7** tritt in unmittelbaren Kontakt mit der Innenseite **22** des Laufgurts **5** und dient mithin der Kraftabtragung von den Haupträdern **3**, **4** in den Laufgurt **5**. In dem gezeigten Beispiel ist das Tragelement **9** einer jeden Übertragungseinheit **8** gurtseitig, das heißt auf seiner dem Kontaktelement **7** zugewandten Gurtseite **10**, mit einem Relief ausgebildet. Diese Ausgestaltung, die sich beispielhaft anhand der **Figuren 5** **und** **7** ergibt, führt dazu, dass eine Verbindungsfläche **30** zwischen dem Kontaktelement **7** und dem Tragelement **9** gegenüber einer Grundfläche **31** des Kontaktelements **7** vergrößert ist. Eine Gegenüberstellung der Verbindungsfläche **30** und der Grundfläche **31** ergibt sich aus **Figur 8**, in der die Übertragungseinheit **8** in einer Explosionsdarstellung dargestellt ist. In dem gezeigten Beispiel ist das Relief mittels einer Mehrzahl von Hochbereichen **15** gebildet, die sich ausgehend von der Gurtseite **10** ist Tragelement **9** gewissermaßen in das Kontaktelement **7** hinein erstrecken. Eine Radseite **11** des Tragelements **9**, die der Gurtseite **10** gegenüberliegt, ist hingegen eben ausgeführt.

In einer vorteilhaften Ausgestaltung, die sich anhand von **Figur 7** ergibt, kann jedoch auch die Radseite **11** mit einem Relief versehen sein, wobei in dem gezeigten Beispiel besagtes Relief mittels einer Mehrzahl von randseitig offenen Luftführungskanäle **29** gebildet ist, die zu der Radseite **11** des Tragelements **9** hin geöffnet sind. In besonders bevorzugter Weise sind die Luftführungskanäle **29** korrespondierend zu den Hochbereichen **15** ausgebildet, wobei das gezeigte Tragelement **9** insbesondere mittels Prägens einer metallischen Platte erfolgen kann. Ein solcher Prägevorgang ist dazu geeignet, das Tragelement **9** derart zu verformen, dass sich während ein und desselben Fertigungsschritts gleichzeitig randseitig offene Luftführungskanäle **29** an der Radseite **11** und gurtseitig Hochbereiche **15** an der Gurtseite **10** des Tragelements **9** ausbilden lassen.

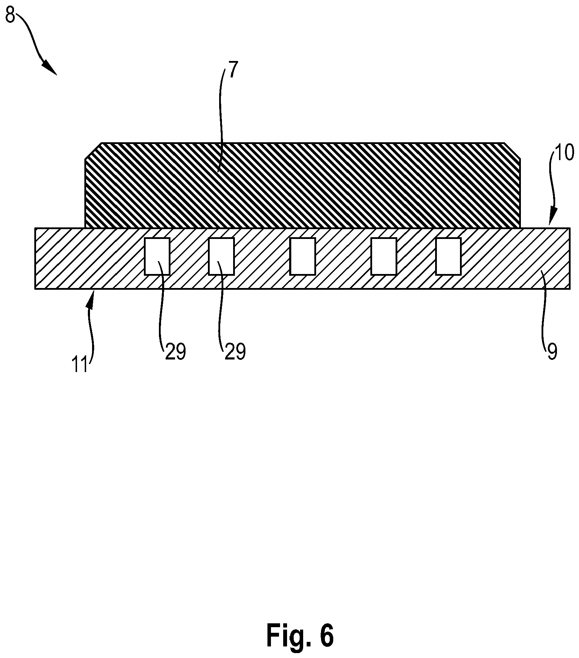

Alternativ zu randseitigen Luftführungskanälen **29** sind gleichermaßen innenliegende Luftführungskanäle **29** denkbar, die das Tragelement **9** durchdringen. Eine entsprechende Ausgestaltung ergibt sich besonders gut anhand von **Figur 6**.in jedem Fall sind die Luftführungskanäle **29** derart zu der Umgebung hin offen ausgebildet, dass sie mit der Umgebungsluft in Kontakt treten können und auf diese Weise dem Tragelement **9** zugeführte Wärmeenergie mittels eines konvektiven Wärmeübergangs abführbar ist.

Um einen Transport von Wärmeenergie von dem Laufgurt **5** hin zu dem Tragelement **9** weiter zu optimieren, ist das Kontaktelement **7** in dem gezeigten Beispiel mit einem Metallanteil versehen. Diese beträgt hier **10** Massenprozent, wobei das Metall in Form eines Metallpulvers in eine Elastomermatrix des elastomeren Kontaktelements **7** eingearbeitet ist.

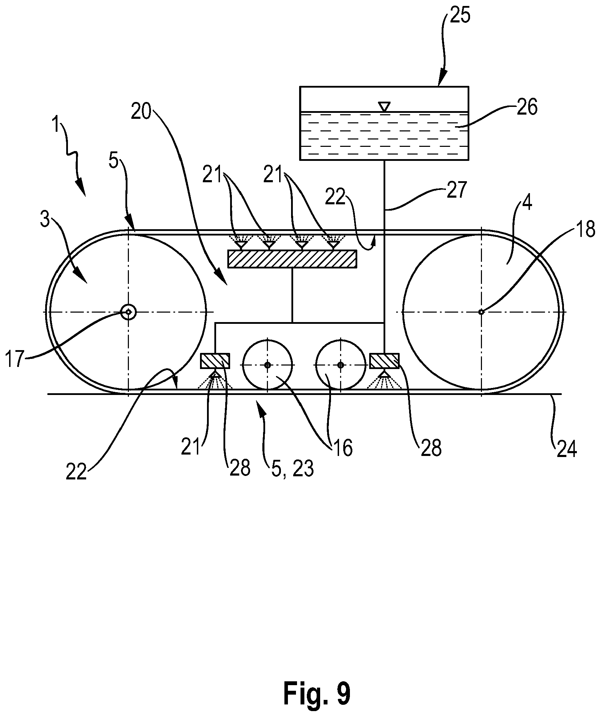

Zwecks verbesserter Abfuhr von Wärmeenergie von dem Laufgurt **5** verfügt das Raupenlaufwerk **1** ferner über ein Kühlsystem **20**, dass sich insbesondere anhand der schematischen Darstellung gemäß **Figur 9** ergibt. Das Kühlsystem **20** wirkt hier mit einem Fluidtank **25** zusammen, mittels dessen ein Kühlfluid **26** vorhaltbar ist. Das Kühlfluid **26** ist in dem gezeigten Beispiel von Wasser gebildet. Der Fluidtank **25**, der beispielsweise an der jeweiligen Arbeitsmaschine **2** gelagert sein kann, ist mittels einer Leitung **27** mit einer Mehrzahl von Düsen **21** strömungstechnisch verbunden. Auf diese Weise kann den Düsen **21** das Kühlfluid **26** zugeleitet werden. Die Düsen **21** sind jeweils an einem zugeordneten Düsenträger **28** angeordnet, wobei sie in der Innenseite **22** des Laufgurts **5** zugeordnet sind. Auf diese Weise sind die Düsen **21** dazu geeignet, das Kühlfluid **26** auf die Innenseite **22** des Laufgurts **5** aufzutragen, wobei das Kühlfluid **26** mittels der Düsen **21** zerstäubbar ist, sodass das Kühlfluid **26** in Form eines Kühlnebels auf die Innenseite **22** austragbar ist. Mittels Auftrags des Kühlfluids **26** auf den Laufgurt **5** wird der Laufgurt **5** gekühlt, wobei das Kühlfluid **26** insbesondere eine Verdampfungsenergie aufnimmt, die in Form von Wärmeenergie von dem Laufgurt **5** abfließt.

### Bezugszeichenliste

- 1: Raupenlaufwerk
- 2: Arbeitsmaschine
- 3: Hauptrad
- 4: Hauptrad
- 5: Laufgurt
- 6: Führungsabschnitt
- 7: Kontaktelement
- 8: Übertragungseinheit
- 9: Tragelement
- 10: Gurtseite
- 11: Radseite
- 12: Führschenkel
- 13: Tragabschnitt
- 14: Felgensegment
- 15: Hochbereich
- 16: Hilfsrad
- 17: Drehachse
- 18: Drehachse
- 19: Befestigungsmittel
- 20: Kühlsystem
- 21: Düse
- 22: Innenseite
- 23: Bodenabschnitt
- 24: Untergrund
- 25: Fluidtank
- 26: Kühlfluid
- 27: Leitung
- 28: Düsenträger
- 29: Luftführungskanal
- 30: Verbindungsfläche
- 31: Grundfläche
- 32: Führungsklotz
- 33: Felge

## Patentansprüche

1. Raupenlaufwerk (1), insbesondere für eine landwirtschaftliche Arbeitsmaschine (2), umfassend
- zwei in Längsrichtung des Raupenlaufwerks (1) hintereinander sowie einander gegenüberliegend angeordnete Haupträder (3, 4),
- mindestens einen die Haupträder (3, 4) umspannenden Laufgurt (5),
wobei die Haupträder (3, 4) jeweils mindestens einen sich in Umfangsrichtung des jeweiligen Hauptrades (3, 4) erstreckenden Führungsabschnitt (6) aufweisen, mittels dessen der Laufgurt (5) führbar ist,
wobei die Haupträder (3, 4) jeweils mindestens eine Übertragungseinheit (8) aufweisen, die gurtseitig an mindestens einem Führungsabschnitt (6) zumindest eines der Haupträder (3, 4) angeordnet ist,
wobei die Übertragungseinheit (8) ein radseitiges Tragelement (9) sowie ein gurtseitig mit dem Tragelement (9) verbundenes Kontaktelement (7) umfasst, das dazu geeignet ist, in unmittelbaren Kontakt mit dem Laufgurt (5) zu treten,
**dadurch gekennzeichnet, dass**
eine dem Kontaktelement (7) zugewandte Gurtseite (10) des Tragelements (9) mit einem Relief ausgebildet ist, sodass eine Verbindungsfläche (30) zwischen dem Kontaktelement (7) und dem Tragelement (9) gegenüber einer Grundfläche (31) des Kontaktelements (7) vergrößert ist.

2. Raupenlaufwerk (1) nach Anspruch 1, **dadurch gekennzeichnet, dass** eine dem Kontaktelement (7) abgewandte Radseite (11) des Tragelements (9) mit einem Relief ausgebildet ist, sodass eine Kontaktfläche zwischen dem Tragelement (9) und dem zugeordneten Führungsabschnitt (6) des jeweiligen Hauptrades (3, 4) gegenüber einer Grundfläche des Tragelements (9) vergrößert ist.

3. Raupenlaufwerk (1) nach einem der vorhergehenden Ansprüche, **dadurch gekennzeichnet, dass** das Tragelement (9) mindestens einen Luftführungskanal (29) umfasst.

4. Raupenlaufwerk (1) nach Anspruch 3, **dadurch gekennzeichnet, dass** mindestens ein Luftführungskanal (29) das Tragelement (9) in Umfangsrichtung des jeweilig zugeordneten Hauptrades (3, 4) durchdringt.

5. Raupenlaufwerk (1) nach Anspruch 3 oder 4, **dadurch gekennzeichnet, dass** mindestens ein Luftführungskanal (29) an einer Radseite (11) des Tragelements (9) angeordnet ist, sodass der Luftführungskanal (29) radseitig offen ausgebildet ist.

6. Raupenlaufwerk (1) nach einem der vorhergehenden Ansprüche, **dadurch gekennzeichnet, dass** das Kontaktelement (7) von einem Gummi, insbesondere von einem Elastomer, gebildet ist, wobei vorzugsweise das Kontaktelement (7) einen Metallanteil von mindestens 5 Massen-%, vorzugsweise mindestens 10 Massen-%, aufweist.

7. Raupenlaufwerk (1) nach einem der vorhergehenden Ansprüche, **dadurch gekennzeichnet, dass** mindestens eines der Haupträder (3, 4), vorzugsweise beide Haupträder (3, 4), eine Vielzahl einzelner Felgensegmente (14) aufweisen, die jeweils radial außenliegend einen sich in Umfangsrichtung des jeweiligen Hauptrades (3, 4) erstreckenden Führungsabschnitt (6) aufweisen.

8. Raupenlaufwerk (1) nach Anspruch 7, **dadurch gekennzeichnet, dass** zumindest eine Mehrzahl der Felgensegmente (14), vorzugsweise sämtliche Felgensegmente (14), jeweils eine Übertragungseinheit (8) aufweisen.

9. Raupenlaufwerk (1) nach einem der vorhergehenden Ansprüche, **dadurch gekennzeichnet, dass** die Übertragungseinheit (8) zerstörungsfrei lösbar an dem jeweiligen Führungsabschnitt (6) befestigt ist.

10. Raupenlaufwerk (1) nach einem der vorhergehenden Ansprüche, **gekennzeichnet durch** mindestens ein Kühlsystem (20), wobei mittels des Kühlsystems (20) mindestens eine Komponente des Raupenlaufwerks (1) kühlbar ist, wobei das Kühlsystem (20) dem Laufgurt (5) zugeordnet ist, wobei das Kühlsystem (20) mindestens eine Düse (21) umfasst, mittels der ein flüssiges Kühlfluid (26) auf eine den Haupträdern (3, 4) zugewandte Innenseite (22) des Laufgurts (5) aufbringbar ist.

11. Raupenlaufwerk (1) nach einem der vorhergehenden Ansprüche, **dadurch gekennzeichnet, dass** das Kühlfluid (26) mittels der Düse (21) zerstäubbar ist, sodass das Kühlfluid (26) in Form eines Kühlnebels auf den Laufgurt (5) aufbringbar ist.

## Claims

1. A track roller unit (1), in particular for an agricultural working machine (2), comprising
- two main wheels (3, 4) disposed one behind the other in the longitudinal direction of the track roller unit (1) as well as opposite one another,
- at least one endless belt (5) spanning the main wheels (3, 4),
wherein the main wheels (3, 4) respectively have at least one guide section (6) which extends in the circumferential direction of the respective main wheel (3, 4), by means of which the endless belt (5) can be guided,
wherein the main wheels (3, 4) respectively have at least one transmission unit (8) which is disposed on the belt side on at least one guide section (6) of at least one of the main wheels (3, 4),
wherein the transmission unit (8) comprises a support element (9) on the wheel side as well as a contact element (7) on the belt side which is connected to the support element (9) and which is suitable for coming into direct contact with the endless belt (5),
**characterized in that**
a belt side (10) of the support element (9) facing the contact element (7) is configured with a relief so that a connecting area (30) between the contact element (7) and the support element (9) is enlarged compared with a base area (31) of the contact element (7).

2. The track roller unit (1) according to claim 1, **characterized in that** a wheel side (11) of the support element (9) facing away from the contact element (7) is configured with a relief so that a contact area between the support element (9) and the associated guide section (6) of the respective main wheel (3, 4) is enlarged compared with a base area of the support element (9).

3. The track roller unit (1) according to one of the preceding claims, **characterized in that** the support element (9) comprises at least one air flow duct (29).

4. The track roller unit (1) according to claim 3, **characterized in that** at least one air flow duct (29) passes through the support element (9) in the circumferential direction of the respective associated main wheel (3, 4).

5. The track roller unit (1) according to claim 3 or claim 4, **characterized in that** the at least one air flow duct (29) is disposed on a wheel side (11) of the support element (9) so that the air flow duct (29) has an open configuration on the wheel side.

6. The track roller unit (1) according to one of the preceding claims, **characterized in that** the contact element (7) is formed from a rubber, in particular from an elastomer, wherein preferably, the contact element (7) contains a proportion of metal of at least 5% by weight, preferably at least 10% by weight.

7. The track roller unit (1) according to one of the preceding claims, **characterized in that** at least one of the main wheels (3, 4), preferably both main wheels (3, 4), have a plurality of individual wheel rim segments (14) which respectively have a radially outwardly lying guide section (6) which extends in the circumferential direction of the respective main wheel (3, 4).

8. The track roller unit (1) according to claim 7, **characterized in that** at least a plurality of wheel rim segments (14), preferably all of the wheel rim segments (14), have a respective transmission unit (8).

9. The track roller unit (1) according to one of the preceding claims, **characterized in that** the transmission unit (8) is releasably attached to the respective guide section (6) in a non-destructive manner.

10. The track roller unit (1) according to one of the preceding claims, **characterized by** at least one cooling system (20), wherein at least one component of the track roller unit (1) can be cooled by means of the cooling system (20), wherein the cooling system (20) is associated with the endless belt (5), wherein the cooling system (20) comprises at least one nozzle (21) by means of which a liquid cooling fluid (26) can be applied to an inside (22) of the endless belt (5) facing the main wheels (3, 4).

11. The track roller unit (1) according to one of the preceding claims, **characterized in that** the cooling fluid (26) can be sprayed by means of the nozzle (21), so that the cooling fluid (26) can be applied to the endless belt (5) in the form of a mist of coolant.

## Revendications

1. Train de roulement à chenilles (1), en particulier pour une machine de travail agricole (2), incluant
- deux roues principales (3, 4) disposées dans la direction longitudinale du train de roulement à chenilles (1) l'une derrière l'autre ainsi qu'à l'opposé l'une de l'autre,
- au moins une bande de roulement (5) entourant les roues principales (3, 4),
les roues principales (3, 4) comportant respectivement au moins une portion de guidage (6) qui s'étend dans la direction circonférentielle de la roue principale respective (3, 4) et au moyen de laquelle la bande de roulement (5) est guidable,
les roues principales (3, 4) comportant respectivement au moins une unité de transmission (8) qui est disposée côté bande sur au moins une portion de guidage (6) au moins d'une des roues principales (3, 4),
l'unité de transmission (8) incluant un élément porteur côté roue (9) ainsi qu'un élément de contact (7) qui est relié côté bande à l'élément porteur (9) et qui est apte à entrer en contact direct avec la bande de roulement (5),
**caractérisé en ce que**
un côté bande (10), tourné vers l'élément de contact (7), de l'élément porteur (9) est conformé avec un relief, de sorte qu'une surface de liaison (30) entre l'élément de contact (7) et l'élément porteur (9) est agrandie par rapport à une surface de base (31) de l'élément de contact (7).

2. Train de roulement à chenilles (1) selon la revendication 1, **caractérisé en ce qu'**un côté roue (11), situé à l'opposé de l'élément de contact (7), de l'élément porteur (9) est conformé avec un relief, de sorte qu'une surface de contact entre l'élément porteur (9) et la portion de guidage associée (6) de la roue principale respective (3, 4) est agrandie par rapport à une surface de base de l'élément porteur (9) .

3. Train de roulement à chenilles (1) selon une des revendications précédentes, **caractérisé en ce que** l'élément porteur (9) inclut au moins un canal de guidage d'air (29).

4. Train de roulement à chenilles (1) selon la revendication 3, **caractérisé en ce qu'**au moins un canal de guidage d'air (29) traverse l'élément porteur (9) dans la direction circonférentielle de la roue principale respectivement associée (3, 4) .

5. Train de roulement à chenilles (1) selon la revendication 3 ou 4, **caractérisé en ce qu'**au moins un canal de guidage d'air (29) est disposé sur un côté roue (11) de l'élément porteur (9), de sorte que le canal de guidage d'air (29) est conformé de manière ouverte côté roue.

6. Train de roulement à chenilles (1) selon une des revendications précédentes, **caractérisé en ce que** l'élément de contact (7) est formé par un caoutchouc, en particulier par un élastomère, préférentiellement l'élément de contact (7) comportant une proportion de métal d'au moins 5 % en masse, préférentiellement d'au moins 10 % en masse.

7. Train de roulement à chenilles (1) selon une des revendications précédentes, **caractérisé en ce qu'**au moins une des roues principales (3, 4), préférentiellement les deux roues principales (3, 4), comportent une pluralité de segments de jante individuels (14) qui comportent respectivement, de manière radialement extérieure, une portion de guidage (6) s'étendant dans la direction circonférentielle de la roue principale respective (3, 4).

8. Train de roulement à chenilles (1) selon la revendication 7, **caractérisé en ce qu'**au moins une pluralité des segments de jante (14), préférentiellement tous les segments de jante (14), comportent respectivement une unité de transmission (8).

9. Train de roulement à chenilles (1) selon une des revendications précédentes, **caractérisé en ce que** l'unité de transmission (8) est fixéee à la portion de guidage respective (6) de façon détachable sans destruction.

10. Train de roulement à chenilles (1) selon une des revendications précédentes, **caractérisé par** au moins un système de refroidissement (20), au moins un composant du train de roulement à chenilles (1) pouvant être refroidi au moyen du système de refroidissement (20), le système de refroidissement (20) étant associé à la bande de roulement (5), le système de refroidissement (20) incluant au moins une buse (21) au moyen de laquelle un fluide de refroidissement liquide (26) est applicable sur un côté intérieur (22) de la bande de roulement (5) tourné vers les roues principales (3, 4).

11. Train de roulement à chenilles (1) selon une des revendications précédentes, **caractérisé en ce que** le fluide de refroidissement (26) est pulvérisable au moyen de la buse (21), de sorte que le fluide de refroidissement (26) est applicable sur la bande de roulement (5) sous la forme d'un brouillard de refroidissement.
